(19) Europäisches Patentamt
European Patent Office
Office européen des brevets

(11) **EP 2 469 824 A1**

(12) **EUROPEAN PATENT APPLICATION**

(43) Date of publication:
**27.06.2012 Bulletin 2012/26**

(51) Int Cl.:
*H04M 11/06* (2006.01)    *H04B 3/46* (2006.01)

(21) Application number: **10306510.8**

(22) Date of filing: **23.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FRANCE TELECOM**
**75015 Paris (FR)**

(72) Inventors:
• **Skweres, Pawel**
  **05-075 Warszawa Wesola (PL)**
• **Dabrowski, Konrad**
  **05-555 Rembertów (PL)**
• **Makowski, Piotr**
  **03-984 Warszawa (PL)**

(74) Representative: **Cabinet Plasseraud**
  **52, rue de la Victoire**
  **75440 Paris Cedex 09 (FR)**

(54) **Crosstalk reduction by DPBO parameters determination**

(57)    The disclosure relates to a method for reducing crosstalk between two communication lines (ADSL, VDSL) by determining three parameters A, B and C of a DPBO model for estimating an attenuation of a first communication line (ADSL), and by attenuating a signal injected in the second communication line (VDSL) according to the DPBO model defined by the three determined DPBO parameters A, B and C.

The disclosure also relates to a computer program implementing such method, to a storage medium storing such computer program, to a DPBO configuration device (DPBOdev) for reducing crosstalk between two communication lines (ADSL, VDSL), and to a communication system comprising such DPBO configuration device (DPBOdev).

FIG.3.

EP 2 469 824 A1

**Description**

The invention generally relates to methods and devices for reducing crosstalk between communication lines, in particular between ADSL and VDSL lines.

ADSL means any type of ADSL from the ADSL standard family, such as ADSL "1", ADSL2, or ADSL2Plus, as specified for example in ITU-T G 992.1, or ITU-T G 992.3, or ITU-T G 992.3L, or ITU-T G 991.5, etc. Similarly, VDSL means any type of VDSL from the VDSL standard family, such as VDSL "1", or VDSL2 as specified for example in ITU-T G 993.1, or ITU-T G 993.2, etc.

A mechanism called DPBO (for Downstream Power Back-Off) has been put in place by organizations such as the broadband forum (a non-profit industry consortium dedicated to developing broadband network specifications) and standardized in standards such as ITU-T G993.2 and ITU-T G997.1.

DPBO establishes a tradeoff between obtaining the best possible signal in a communication line (by injecting a maximal power), and maximally reducing the crosstalk generated by the communication line for neighboring communication lines (by injecting a minimal power in the communication line).

Accordingly, DPBO is used to reduce the power of a signal injected in a communication line in order to reduce crosstalk from this communication line to a neighboring communication line.

Such power reduction is based on the estimated power in the neighboring communication line, so that the power in both communication lines is of a similar order of magnitude.

The power in the neighboring communication line can be estimated by estimating the attenuation in the neighboring communication line.

According to the DPBO model, such attenuation (denoted Att(f)) is equal, for a given frequency f, to:

$$Att(f) = (A + B*sqrt(f) + C*f)*E,$$

where A, B and C are three DPBO parameters, f is the frequency in Hertz, and E is a fourth DPBO parameter called ESIDE_LENGTH. The square root of the frequency f is denoted sqrt(f).

The DPBO parameters (A, B, C, and E) have to be input in the DPBO compatible equipment (e.g. a DSLAM) in order for such equipment to properly manage the signal power.

However, while the standards define the parameters A, B, C, and E, they don't explain how to compute parameters A, B and C optimally.

This poses a problem, since a poor choice of parameters A, B and C can lead to a DPBO model which is very different from the actually measured attenuations, and accordingly to inappropriate decisions leading to either no improvement with respect to crosstalk, or even (potentially) increased crosstalk.

In practice, telecommunication operators acquiring DPBO compatible equipments often used default DPBO parameters values which are supposed to reflect the attenuation in conventional communication lines. Sometimes, the A, B and C parameters can be imposed by regulation bodies (governmental or other), who can also specify the maximum power that can be injected in communication lines (typically with PSD masks parameters). This can happen in particular in the context of local loop unbundling, which is the regulatory process of allowing multiple telecommunications operators to use connections from the telephone exchange to the customer's premises. However, not two communication lines are the same, each line having its own characteristics. Examples of communication line characteristics comprise characteristics of cables used in the communication line, such as length, bend radius and tensile load (stress like impacts on the cable may cause strains having effects on the signal that is carried by the cable), inductance, capacitance, characteristic impedance, DC-Loop resistance, propagation speed, propagation delay, delay skew, cutoff frequency, type of cable such as twisted pair, coaxial cable, etc.

Alternatively, telecommunications operators commonly decide to not use the same frequency bands for contiguous communication lines, in order to avoid crosstalk. However, this wastes available bandwidth.

Sometimes, telecommunication operators try to select better parameters A, B and C by selecting three points on the curve representing the attenuation in the neighboring communication line according to the frequency, the three points being as representative as possible of the overall curve, and by computing parameters A, B and C on the basis of the three selected points. However, this manual operation is not optimal, and the DPBO model that results from such manual input is generally not the best possible, leading to higher crosstalk than can be theoretically achieved.

The invention seeks to improve the situation.

One aspect of the invention relates to a method for reducing crosstalk between two communication lines by determining three parameters A, B and C of a DPBO model for estimating an attenuation of a first communication line, and by attenuating a signal injected in the second communication line according to the DPBO model defined by the three determined DPBO parameters A, B and C. The method is advantageous as it allows an improved selection of DPBO parameters and accordingly an improved reduction of crosstalk. This means that more bandwidth is available for clients connected through the communication lines and that the communications are more reliable (less errors). In addition, the method does not require any knowledge about DPBO by the technician. The technician merely has to execute the method, which defines the parameters automatically (without any initiative on the part of the technician).

Another aspect of the invention relates to a computer program implementing the aforementioned method.

Another aspect of the invention relates to a non-transitory computer-readable storage medium storing the aforementioned computer program.

Another aspect of the invention relates to a DPBO configuration device for reducing crosstalk between two communication lines, comprising means for computing DPBO parameters A, B and C of a communication line. Such DPBO configuration device is advantageous as it enables easy configuration of DPBO parameters A, B and C of a communication line by a technician.

Another aspect of the invention relates to a communication system comprising two network nodes, two communication lines and two network equipments, wherein a first communication line links the first network node with the first network equipment through the second network node, and wherein a second communication line links the second network node with the second network equipment, the system comprising a DPBO configuration device of the aforementioned type.

Other aspects and advantages of the invention will become apparent from the following detailed description of specific embodiments of the invention, and the accompanying drawings, in which:

- Figure 1 represents the different steps of a method according to a possible embodiment of the invention,

- Figure 2 represents a DPBO configuration device according to a possible embodiment of the invention, and

- Figure 3 represents a communication system according to a possible embodiment of the invention.

According to a first embodiment, a method for reducing crosstalk between two communication lines comprises determining three parameters A, B and C of a DPBO model for estimating an attenuation of a first communication line. The communication lines can be composed of several cables connected serially, potentially through equipments which can even be active equipments (comprising repeaters, amplifiers, etc.). The method then attenuates a signal injected in the second communication line according to the DPBO model defined by the three determined DPBO parameters A, B and C, that is the method ensures that the power level in the two communication lines is of a similar order of magnitude (ideally, the two levels should be equal). For example, the method attenuates the signal so that the PSD (power spectral density), typically expressed in Watts by Hertz, be equal in both communication lines.

The method comprises a first step of obtaining a measured attenuation Att_fk of the first communication line for each frequency fk of a set of frequencies f1...fN. There can be for example fifty frequencies, in order to have a reasonably good representation of the attenuation. It is possible to increase the number of frequencies in order to have a better representation, or to decrease the number of frequencies in order to compute the DPBO parameters faster. The actual number of frequencies used can depend on the frequency range and of the type of communication lines used (twisted pair based on copper wire or other metal, shielded twisted pair, CAT5 cables, CAT5e cables, coaxial cables, etc.). The measured attenuation can be an attenuation actually measured by the method (with measurement equipments connected to the communication line), or an attenuation measured beforehand and provided as an input to the method. The measured attenuations may be, for example, as follows:

| Frequency | Attenuation |
|---|---|
| (MHz) | (dB/km) |
| 0,010 | 5,679634 |
| 0,110 | 7,307895 |
| 0,210 | 9,393454 |
| 0,310 | 11,290542 |
| 0,410 | 13,033967 |

| | |
|---|---|
| 1,800 | 34,978392 |
| 1,900 | 35,235967 |
| 2,000 | 37,450695 |
| 2,100 | 38,658195 |
| 2,200 | 40,132187 |
| 2,208 | 40,796567 |

In a second step, for every subset of three frequencies fi,1, fi,2, and fi,3 of the set of frequencies f1...fN the method solves the following set of three equations with three unknowns Ai, Bi and Ci, where E denotes the ESIDE_ LENGTH parameter of the DPBO model, and where Att_fi,1, Att_fi,2 and Att_fi,3 denote the measured attenuations corresponding respectively to frequencies fi,1, fi,2 and fi,3:

(Ai + Bi*sqrt(fi,j) + Ci*fi,j)*E = Att_fi,j, with j=1...3, or to be more specific:
(Ai + Bi*sqrt(fi,1) + Ci*fi,1)*E = Att_fi,1
(Ai + Bi*sqrt(fi,2) + Ci*fi,2)*E = Att_fi,2
(Ai + Bi*sqrt(fi,3) + Ci*fi,3)*E = Att_fi,3

The acronym sqrt denotes the square root operation and i,j represents a double indexing by indexes i and j.
There are N!/(3!*(N-3)!) possible subsets of three frequencies in a set of N frequencies, so for example with 50 frequencies, the method needs to check 19600 possible subsets of three frequencies (i may vary from 1 to 19600), while with 51 frequencies, the method needs to check 20825 possible subsets, etc.
The ESIDE_LENGTH parameter (also known as E-side electrical length or DPBOESEL) defines the assumed electrical length of cables (E-side cables) which may connect exchange based DSL services to a remote flexibility point (cabinet) hosting xTU-C that is subject to spectrally shaped downstream power back-off depending on this length. For this parameter the electrical length is defined as the loss (in dB) of an equivalent length of hypothetical cable at a reference frequency defined by the network operator (typically 1 MHz) or in spectrum management regulations. This parameter ESIDE_LENGTH can be obtained in a manner well known in the art.
The underlying principles of DPBO (i.e. measuring an electrical length of a cable and defining A, B and C parameters which, together with the electrical length, define a curve interpolating the measured attenuation of the cable) are applicable to technologies other than DSL (whenever two neighbouring communication lines are potentially subject to crosstalk), therefore the invention is not limited to DSL communication lines.
In a third step, for each set of values Ai, Bi and Ci that was determined in the second step, the method determines a DPBO model quality parameter Qi. For example, if N is equal to 50 (i.e. if 50 measurements of attenuation, at 50 different frequencies, were obtained), then 19600 different values of parameters Qi are determined. Each parameter Qi assesses, for all frequencies fk of the set of frequencies f1...fN, the difference between the measured attenuation Att_ fk for frequency fk, and the attenuation (Ai + Bi*sqrt(fk) + Ci*fk)*E estimated for frequency fk by the DPBO model. Therefore Qi assess the overall quality of the DPBO model. Indeed, the attenuation estimated by the DPBO model may be quite different from the measured attenuation for a few frequencies fk (e.g. 2 frequencies out of 50 frequencies), but almost identical for all other frequencies (e.g. 48 frequencies out of 50), in which case it might well be the best available model. It is possible to compute each quality parameter just after having determined each corresponding DPBO model, or alternatively to first determine all models, and only then compute the quality parameter for each of the models.

In a fourth step, the method selects as parameters A, B and C the values Ai, Bi and Ci for which the quality parameter Qi has the lowest value. The value Qi is positive, as only the absolute value of the difference is taken into account (a bias of the model, whether it gives estimated attenuations that are below the measured attenuations or above, is considered equally "bad"). The selection can be an ongoing process, for example each time a new DPBO model has been determined it is possible to compare it to the best of the previously determined models, and accordingly to either replace the previously best model by the current model (if it is better) or on the contrary to keep the previous best model (if it was better than the newly determined model).

The method is advantageous as it allows an improved selection of DPBO parameters and accordingly an improved reduction of crosstalk. This means that more bandwidth is available for clients connected through the communication lines and that the communications are more reliable (less errors). In addition, the method does not require any knowledge about DPBO by the technician. The technician merely has to execute the method, which defines the parameters automatically (without any initiative on the part of the technician).

According to a second embodiment, the method according to the first embodiment, may compute the quality parameter Qi by defining it as the sum of the square of the difference between the measured attenuation Att_fk and the attenuation predicted by the DPBO model for each frequency fk of the set of frequencies f1... fN, that is:

$$Qi = sum(k=1…N, square((Ai + Bi*sqrt(fk) + Ci*fk)*E-Att\_fk)).$$

This is advantageous, as it mitigates the averaging effect of the sum, and more weight is given to very strong differences, compared, for example, to a mere sum of the absolute values of the differences (which is a possible embodiment). Therefore a model which is otherwise excellent but has a very strong bias (seldom, for a few frequencies only) can be excluded as it is (albeit exceptionally) completely erroneous. It would be possible to use, for each difference between the model and the measurement, powers other than 2 (i.e. other than square), including non integer powers (such as 3.1 for example) in order to tune the quality parameter by giving more (or less, if the power is lower than 2) weight to isolate errors or artefacts in the DPBO model.

According to a third embodiment, the method according to the first or second embodiment applies to a first communication line which is an ADSL communication line (i.e. any type of ADSL) and to a second communication line which is a VDSL communication line (i.e. any type of VDSL, for example a VDSL2 communication line, VDSL2 being the second-generation of VDSL specified in ITU-T G.993.2). The cables used for such communication lines are for example PE04 cables (the Broadband Forum indicates what default DPBO parameters A, B and C to use for PE04 cables; however such parameters are in general not optimal).

In such context, the ADSL line may start from a central office (or exchange) of a telecommunication operator, and go through a remote office (which can even be in the premises of the client, especially in a corporate context) in order to connect a client equipment such as an ADSL modem. The VDSL (or VDSL2) line may start from the remote office, therefore we face a risk, since the ADSL signal has already been (presumably substantially) attenuated between the central office and the remote office, while the neighbouring VDSL line contains a signal which is (by default) injected with full power at the level of the remote office and could generate a lot of disturbance in the ADSL signal. Since the ADSL signal is roughly between 0 MHz and 2 MHz, while the VDSL signal is roughly between 0 MHz and 30 MHz, a well-known technique discussed above in a more general context consists in using only the spectrum from 2 MHz to 30 MHz for the VDSL signal, which very efficiently removes crosstalk in the 0 MHz-2 MHz band. Unfortunately, the 0 MHz-2 MHz sub-band is the best part of the 0 MHz-30 MHz band, as signals in such bands are much less attenuated, especially when the distance between the remote office and the client equipment is substantial. The proposed method is therefore particularly advantageous as it allows using the whole 0 MHz-30 MHz band for VDSL signals, by adapting the power injected in the 0 MHz-2 MHz band of the VDSL signal, and accordingly improves the downstream bandwidth of the VDSL line (up to 100Mb/s with VDSL2). This can be essential for certain services (such as High Definition Television) which would simply not be available in certain environments without the proposed method. The method is also particularly useful in the context of future deployments of VDSL2 lines in presence of many existing ADSL lines, as it would not be acceptable for a telecommunication operator to deteriorate the quality of service of existing customers due to the introduction of a new technology for new customers. The method significantly simplifies such deployments, and reduces operators' maintenance work (and accordingly maintenance costs) as well as technical support (and associated costs) which would be incurred subsequently to an inappropriate definition of the DPBO A, B and C parameters.

According to a fourth embodiment, the method according to any of the first to third embodiments uses a set of frequencies containing regularly spaced frequencies between 0.138 MHz and 2.208 MHz (typically rounded to 2.2 MHz or even 2 MHz in product documentations). In particular, in the context of ADSL communication lines, it is advantageous to use approximately 50 frequencies (with an increment between frequencies of about 41 kHz) as it represents a good tradeoff between accurate measurement of the attenuation (50 frequencies is a good input for defining a proper DPBO model in a 0 MHz-2 MHz band) and the complexity of the determination of the DPBO model (approximately 20000 candidate DPBO models to compare). In addition, given that the DPBO model is represented by a fixed number of parameters, it is useless to provide more than a certain number of measurements, since after a certain threshold has been reached, the DPBO model accuracy is limited by the number of parameters it is based on, and no longer by the number of measurements that have been provided to it.

Different versions of ADSL use different parts of the spectrum for downstream transmission. For example, the highest frequency of ADSL "1" (specified in ITU-T G992.1) is approximately 1.1 MHz. In various ADSL versions (ITU-T G992.1, ITU-T G992.3, ITU-T G992.3L, ITU-T G991.5, etc.) downstream transmission can start for example from 138 kHz (i.e. it leaves the bottom of the spectrum available for regular "POTS" communications) or from 276 kHz (i.e. it leaves the bottom of the spectrum available for regular ISDN communications, or it's an Annex M ADSL line). Annex M is an optional specification in ITU-T recommendations G.992.3 (ADSL2) and G.992.5 (ADSL2+), also referred to as ADSL2 M and ADSL2+ M. Annex M extends the capability of commonly deployed Annex A lines by more than doubling the number of upstream bits. In Annex M, the upstream/downstream frequency split has been shifted from 138 kHz up to 276 kHz. This typically allows upstream bandwidth to be increased from 1.4 Mbit/s to 3.3 Mbit/s, with a corresponding decrease in download bandwidth.

So according to variants of the fourth embodiment, the set of frequencies may also be in the range:

138 kHz-1.1 MHz,

276 kHz - 1.1 MHz, or

276 kHz - 2.2 MHz.

Doing measurements in the whole 138 kHz - 2.2 MHz band covers all variants above, but if the specific version of ADSL is known, it is possible to use the (possibly smaller) band actually used for the real ADSL line, which, if smaller, may provide a more accurate model, and is faster to process (when computing A, B and C parameters).

According to a fifth embodiment, the method according to any of the first to fourth embodiments determines parameters A, B and C once for all for a given first communication line, during a configuration step of said first communication line. For example, when an ADSL line is installed for a new client, it is possible to determine the parameters A, B and C for the line and store them (for future use if there is no neighbouring line, especially no VDSL neighbouring line). Alternatively, the ADSL line may be configured once for all but only at a later stage, for example when a VDSL line is installed next to it. It is understood that there might be different types of configurations of a communication line, and that the configuration step considered here is only the configuration step dealing with the determination of the DPBO parameters of the line. However, this configuration step is advantageously carried out together with all other initial configuration steps that may be required on the communication line, in order to limit the number of times a technician needs to go to the cabinet or other equipment where the communication line is managed.

Of course, if the communication line changes, for example if a cable is replaced, or if an accident happened that was brought to the attention of the operator (e.g. strain on a cable of the communication line, without the cable being broken), then it is advantageous to carry out the configuration step again in order to re-compute the A, B and C parameters which may have changed (it is no longer the same communication line as it was in the past, even though it still links the same network equipment to the same client equipment).

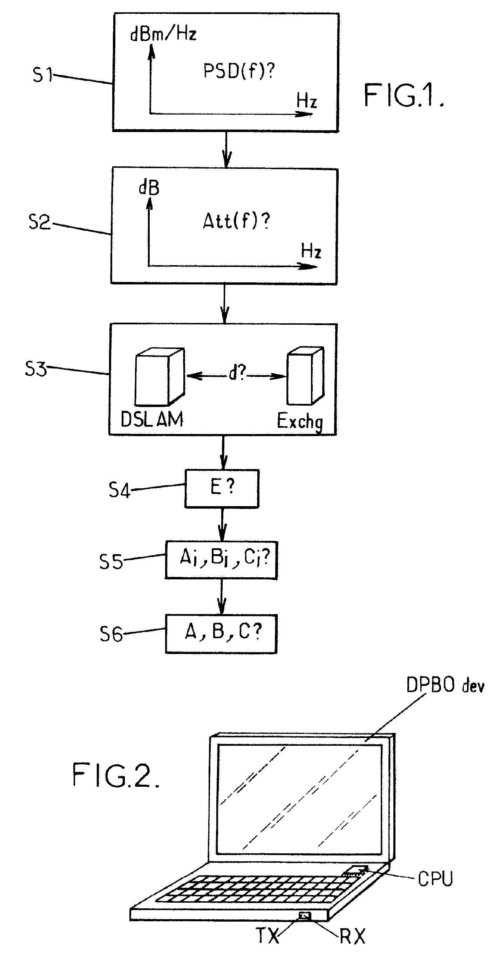

Figure 1 represents the different steps of a method according to a possible embodiment of the invention, which is useful for introducing a VDSL2 system in an existing operator network with ADSL2Plus lines. ADSL2Plus (or ADSL2+) is specified in ITU G.992.5 and allows download speeds up to 24Mbit/s.

In a first step S1, the method defines a mask of power spectral density (PSD) expressed in dBm/Hz for a signal to be protected. The signal to be protected is the signal towards the subscriber (in this example an ADSL2Plus client), not the uplink signal from the subscriber to the operator's network. The PSD mask is defined in the range of frequencies which could be affected (disrupted by crosstalk) by a VDSL2 signal in an adjacent communication line. For an ADSL2Plus line, it is proposed to define the PSD from 138 kHz to 2208 kHz, every 4.3125 kHz (there are therefore 481 different PSD values). A lower number of frequencies could be used in order to obtain a faster method. This step S1 is optional as it may have been already carried out in the past (and the PSD information may be already known). Alternatively, the PSDs may be known if they are set to predetermined values (then the method may simply use default values and skip step S1).

In a second step S2, the method determines, for the same range of frequencies as the one used in step S1, the attenuation (expressed in dB) of a cable unit corresponding to an actual copper twisted pair used to transmit data towards the subscriber the ADSL2Plus signal to be protected. Step S2 may simply consist in receiving the attenuation data.

In a third step S3 (optional), the method determines the length of the actual copper twisted pair corresponding to the above cable unit, that is the section of cable located between the source of the ADSL2Plus signal (typically in a telephone exchange) and the location where the VDSL2 signal is generated (typically in a flexibility point). This step S3 alone is well-known in the art, and is not mandatory as it is known in the art to compute the DPBO parameter E (which is an attenuation, despite the fact that it is called "length") from step S2.

In a fourth step S4, the method determines, in a manner well-known in the art, the DPBO parameter E (E-side electrical length), expressed in dB, on the basis of step S3 (or from step S2 directly). Alternatively, the parameter E may have been pre-computed and may simply be provided to the method as an input parameter (in which case steps S3 and S4 do not take place).

In a fifth step S5, the method constructs, for each subset of three frequencies $f_i,1$, $f_i,2$, and $f_i,3$ of the set of frequencies, a system of three linear equations with three unknowns $A_i$, $B_i$ and $C_i$. Each of the three equations defines the attenuation value that the DPBO model should provide (for one of the three frequencies) based on a measured attenuation obtained in step S2. In other words, the attenuations estimated by the DPBO model (the DPBO model constructed for the set of frequencies number i) are to be exactly equal (by construction) to the measured attenuations for the three frequencies $f_i, 1$, $f_i,2$ and $f_i,3$ that are considered, and to be equal to whatever the model provides for the other frequencies (478 frequencies in this example). For each of the 478 frequencies (N-3 frequencies in the general case) not taken into account for creating the $i^{th}$ model, the model gives a value which is in general close to the corresponding measured value if the model is good, but which can be quite different from the measured value especially if the model is not so good. Since three expected values of attenuations are provided and since there are three unknowns, the method can solve the system of equations in a manner known in the art, and can determine the values $A_i$, $B_i$ and $C_i$. Each set of values $A_i$, $B_i$ and $C_i$ (with i varying between 1 and 18431920 if there are 481 frequencies, each i corresponding to one of the subsets of three frequencies among the 481 frequencies) represents a set of candidates A, B and C parameters values for the DPBO model to be selected (among the more than 18 millions of DPBO models that are constructed). With 481 frequencies, it is recommended to not rely on an off-the-shelf spreadsheet program but rather to implement a customized software, which can accordingly provide much higher performances (in terms of time required to process all data). A spreadsheet program can be used, but may be slow and waste the time of the technician configuring the line.

In a sixth step S6, the method determines A, B and C based on the set of values $A_i$, $B_i$ and $C_i$ such that the DPBO model is the best model considering the attenuations predicted by the model for the whole set of frequencies (481 frequencies in this example). As in step S5, for 481 frequencies, a dedicated program is in general more appropriate than for example a macro in a spreadsheet program.

In steps S5 and S6, it is also possible to send the 481 measured attenuations (plus other relevant parameters) from a DPBO configuration device (e.g. a laptop computer) to a server. This may be done via a standard Internet connection (e.g. WiFi or 3G based Internet connection). The server is in this example much more powerful than the laptop in terms of processing power. The server may quickly solve the systems of equations and select the best model. The server may then return the parameters A, B and C to the DPBO configuration device through the same Internet connection.

A sixth embodiment concerns a DPBO configuration device DPBOdev for reducing crosstalk between two communication lines. The DPBO configuration device can be for example a general purpose computer such as a laptop running a Linux or Microsoft Windows operating system.

The DPBO configuration device comprises a receiver for obtaining a measured attenuation Att_fk of a first communication line for each frequency fk of a set of frequencies f1...fN. The attenuations Att_fk for each frequency fk may be stored in a hard drive of the DPBO configuration device (with magnetic storage technology), or on any kind of storage medium (such as Flash memory, EEPROM memory, battery protected RAM memory, etc.). The receiver may be a communication port (e.g. a USB port, an Ethernet port, an IEEE 1394 port, a Bluetooth port, an IrDA port, a WLAN port, etc.), coupled with hardware and/or software for receiving and storing the measured attenuation. Such software may for example comprise a macro of a spreadsheet program in order to import attenuation data received from a communication port into a sheet of the spreadsheet program. The receiver does not have to receive a high volume of data. Therefore it does not need to be able to handle a high bandwidth. However it obviously does not pose any problem to have a high performance receiver. Alternatively, the DPBO configuration device can comprise sensors and/or signal generators to directly measure the attenuation of the first communication line by connecting the first communication line to a communication port of the DPBO configuration device.

The DPBO configuration device comprises a processing unit for solving, for every subset of three frequencies $f_i,1$, $f_i,2$ and $f_i,3$ of the set of frequencies f1...fN, the following set of three equations with three unknowns $A_i$, $B_i$ and $C_i$, where E is the ESIDE_LENGTH parameter of a DPBO model for estimating an attenuation of the first communication line, and Att_fi, 1, Att_fi,2 and Att_fi,3 denote the measured attenuations corresponding respectively to frequencies fi, 1, fi,2 and fi,3:

$$(Ai + Bi*sqrt(fi,j) + Ci*fi,j)*E = Att\_fi,j, \text{ with } j=1\ldots3.$$

The processing unit can be a processor coupled with appropriate software for solving three linear equations with three unknowns (in a manner well known in the art). It can also be, for example, a piece of dedicated electronics (e.g. wired logic) to carry out the same, which may be advantageous for performance reasons (it is possible to achieve faster computation results), but is typically longer to develop. The processing unit may rely on a sheet of a spreadsheet program (such as a Microsoft Excel or OpenOffice Calc sheet). It can be advantageous to develop ad hoc software instead of using a spreadsheet program. An ad hoc program is typically faster and may provide a more convenient user interface for the technicians configuring the communication lines, but it is typically longer to develop.

The DPBO configuration device comprises a DPBO model quality determination module for determining, for each set of values Ai, Bi and Ci determined by the processing unit, a DPBO model quality parameter Qi assessing the difference between the measured attenuation Att_fk for frequency fk and the attenuation (Ai + Bi*sqrt(fk) + Ci*fk)*E estimated for frequency fk by the DPBO model. The DPBO model quality determination module can be a processor coupled with software, and the processor can be common with a processor of the processing unit. Such software can comprise a spreadsheet program. The DPBO model quality determination module can also be, for example, a piece of dedicated electronics (e.g. wired logic) to carry out the same (it provides increased performance, but its development is longer).

The DPBO configuration device comprises a selection module for selecting a DPBO model for the first communication line by selecting DPBO parameters A, B and C corresponding to the values Ai, Bi and Ci for which the quality parameter Qi has the lowest value. The selection module may be a software component, which may comprise a spreadsheet program, or a dedicated electronics component. The selection module may be a component of the DPBO model quality determination module.

The DPBO configuration device also comprises a transmitter for sending the selected parameters A, B and C to a network node (such as a flexibility point FlexPt) set to inject signals in a second communication line. The transmitter only needs to transmit small quantities of data and does not need to be a high end transmitter (a low performance transmitter is acceptable, although it can also be a high performance transmitter). The transmitter may be a communication port (e.g. a USB port, an Ethernet port, an IEEE 1394 port, a Bluetooth port, an IrDA port, a WLAN port, etc.), coupled with hardware and/or software for sending the parameters A, B and C. Such software may comprise a macro of a spreadsheet program. The transmitter can use the same physical port as the receiver. In such case the physical port may have to be connected alternatively to a first equipment (to receive or measure attenuation) and to a second equipment (to send the parameters). However, in a possible embodiment the same equipment handles both interfaces (for receiving measured attenuations Att_fk and for sending the selected parameters A, B and C) through the same physical port and a single connection is sufficient.

Such DPBO configuration device is advantageous as it enables easy configuration of DPBO parameters A, B and C of a communication line by a technician. Quite often the configuration cannot be done remotely and typically requires the technician to go to the premises where the network node (e.g. access concentrator) in charge of injecting a signal in the second communication line resides.

According to a seventh embodiment, the device according to the sixth embodiment is arranged for the DPBO model quality determination module to compute a quality parameter Qi equal to the sum, for each frequency fk of the set of frequencies f1...fN, of the square of the difference between the real attenuation Att_fk and the attenuation predicted by the DPBO model for frequency fk, that is:

$$Qi = sum(k=1\ldots N,square((Ai + Bi*sqrt(fk) + Ci*fk)*E-Att\_fk)).$$

According to an eighth embodiment, the device according to the sixth or seventh embodiments is arranged to manage a first communication line of the ADSL type and a second communication line of the VDSL type, which is advantageous since the concomitant use of ADSL and VDSL technologies can give rise to particularly high risks of crosstalk.

Figure 2 represents a DPBO configuration device (denoted DPBOdev) according to a possible embodiment of the invention. This DPBO configuration device is a laptop computer comprising a processing unit (a processor denoted CPU), a receiver (denoted RX) and a transmitter (denoted TX). Both the receiver and the transmitter use the same communication port, namely a USB port. The DPBO configuration device comprises a piece of software for carrying a method according to the invention.

A ninth embodiment concerns a communication system comprising two network nodes, two communication lines (for example an ADSL line and a VDSL line) and two network equipments. A first communication line links the first network node with the first network equipment through the second network node, and a second communication line links the second network node with the second network equipment. The second network equipment may be in the same premises as the first network equipment (for example two modems located in the same building, on modem belonging to a family living on the first floor and the other to the family on the second floor). The two communication lines may follow substantially the same path (from the second network node to some client premises) and therefore may be subject to crosstalk in case no specific action is taken to prevent crosstalk. In particular, the two communication lines may use cables belonging to the same wiring harness (and be very close one to the other, which highly increases risks of crosstalk). The system comprises a DPBO configuration device DPBOdev according to the sixth embodiment for reducing crosstalk between the two communication lines.

According to a tenth embodiment, in the system according to the ninth embodiment, the first network node is an Exchange (for example a telecommunication Exchange comprising a remote Digital Subscriber Line Access Multiplexer or remote DSLAM), and the second network node is a flexibility point FlexPt (e.g. an access concentrator). The first communication line is an ADSL line and the second communication line is a VDSL line (for example a VDSL2 line). The first network equipment is an ADSL client modem Clt1, and the second network equipment is a VDSL client modem Clt2.

According to an eleventh embodiment, the system according to the ninth or tenth embodiment is arranged to obtain, with the receiver of the DPBO configuration device DPBOdev, a measured attenuation Att_fk which is an attenuation in the section of the first communication line between the first network node and the second network node. This is particularly advantageous when the first communication line is an ADSL line and the second communication line is a VDSL line, since it allows the VDSL signal power to be adapted in order to not generate substantial crosstalk in the ADSL line while making use of the 0 MHz-2 MHz band, which is the best part of the VDSL band.

According to a twelfth embodiment, the system according to any of the ninth to eleventh embodiments is arranged for the second network node to comprises an attenuation module for attenuating signals injected in the second communication line according to a DPBO model of the first communication line defined by the three parameters A, B and C provided by the DPBO configuration device DPBOdev. The attenuation module can comprise for example a Variable Gain Amplifier (VGA).

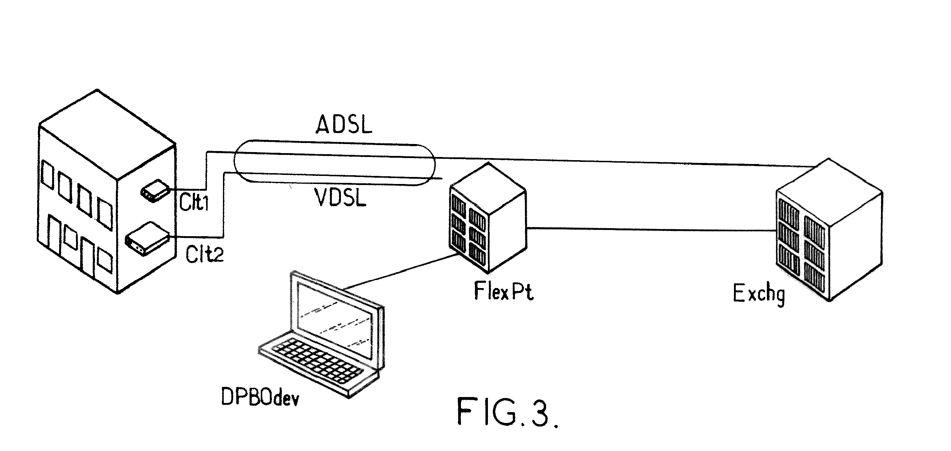

Figure 3 represents a communication system according to a possible embodiment of the invention. A telephone exchange (denoted Exchg) is connected with a DSLAM (denoted FlexPt) with an optical link. The DSLAM is set to establish a VDSL connection with a VDSL modem (denoted Clt2) via a copper wire. Accordingly, the data sent/received from/by the VDSL modem go through the copper wire between the VDSL modem and the DSLAM, and through the optical link between the DSLAM and the telephone exchange. On the other hand, the telephone exchange is set to establish an ADSL connection with an ADSL modem (denoted Clt1) through a copper wire. The copper wire used for the VDSL connection and the segment of copper wire used for the ADSL connection between the DSLAM and the premises in which the ADSL and VDSL modems are located both belong to the same wiring harness. A DPBO configuration device DPBOdev (a laptop computer in this embodiment) is connected to the DSLAM. The DPBO configuration device is used to determine the DPBO parameters A, B and C of the ADSL connection between the telephone exchange and the DSLAM and to communicate them to the DSLAM. This allows the DSLAM to attenuate the VDSL signal generated for the VDSL modem according to the estimated attenuation for the ADSL signal, and accordingly to minimize crosstalk between the ADSL line and the VDSL line, in particular crosstalk from the VDSL line to the ADSL line.

A thirteenth embodiment relates to a computer program comprising one or more stored sequences of instructions that are accessible to a processor and which, when executed by the processor, cause the processor to carry out the steps of any of the first to fifth embodiments. This can be for example a computer program product developed at least in parts in a language such as an assembly language specific to a processor, or C, C++, C#, java, or Visual Basic for Applications (VBA) which can be used to develop macros in Microsoft Excel.

A fourteenth embodiment relates to a non-transitory computer-readable storage medium storing the computer program according to the thirteenth embodiment. This can be for example a USB key, a CD ROM, a DVD, or a Blu-ray disc.

Of course, the invention is not limited to the above described exemplary embodiments, and the crosstalk reduction can be applied to any communication lines (not necessarily ADSL and VDSL), such as any kind of computer networks (ATM, Ethernet, etc.) or telephone networks (ISDN etc.) although it obviously does not apply to networks which are not susceptible to crosstalk such as optical network. The DPBO configuration device has been described as being a laptop computer, however it could be any kind of electronic device, such as handheld device or on the contrary a very powerful computing equipment embedded for example in a box truck used by technicians to drive to the relevant site and to configure communication lines on site.

**Claims**

1. A method for reducing crosstalk between two communication lines (ADSL, VDSL) by determining three parameters A, B and C of a DPBO model for estimating an attenuation of a first communication line (ADSL), and by attenuating a signal injected in the second communication line (VDSL) according to the DPBO model defined by the three determined DPBO parameters A, B and C, the method comprising:

   /1/ obtaining a measured attenuation Att_fk of the first communication line (ADSL) for each frequency fk of a set of frequencies f1...fN;
   /2/ for every subset of three frequencies fi,1, fi,2, and fi,3 of the set of frequencies f1...fN, solving the following set of three equations with three unknowns Ai, Bi and Ci, where E denotes the ESIDE_LENGTH parameter of the DPBO model, and where Att_fi,1, Att_fi,2 and Att_fi,3 denote the measured attenuations corresponding respectively to frequencies fi, 1, fi,2 and fi,3:

$$(Ai + Bi*sqrt(fi,j) + Ci*fi,j)*E = Att\_fi,j, \text{ with } j=1...3;$$

   /3/ for each set of values Ai, Bi and Ci that was determined in step /2/, determining a DPBO model quality parameter Qi assessing, for all frequencies fk of the set of frequencies f1...fN, the difference between the measured attenuation Att_fk for frequency fk, and the attenuation (Ai + Bi*sqrt(fk) + Ci*fk)*E estimated for frequency fk by the DPBO model, and
   /4/ selecting as parameters A, B and C the values Ai, Bi and Ci for which the quality parameter Qi has the lowest value.

2. The method according to claim 1, wherein the quality parameter Qi is equal to the sum of the square of the difference between the measured attenuation Att_fk and the attenuation predicted by the DPBO model for each frequency fk of the set of frequencies f1... fN, that is:

$$Qi = sum(k=1...N, square((Ai + Bi*sqrt(fk) + Ci*fk)*E - Att\_fk)).$$

3. The method according to claim 1, wherein the first communication line (ADSL) is an ADSL communication line and the second communication line (VDSL) is a VDSL communication line.

4. The method according to claim 3, wherein the set of frequencies contains regularly spaced frequencies between 0.138 MHz and 2.208 MHz.

5. The method according to claim 1, wherein the parameters A, B and C are determined once for all for a given first communication line (ADSL), during a configuration step of said first communication line (ADSL).

6. A DPBO configuration device (DPBOdev) for reducing crosstalk between two communication lines (ADSL, VDSL), comprising:

   - a receiver for obtaining a measured attenuation Att_fk of a first communication line (ADSL) for each frequency fk of a set of frequencies f1...fN;
   - a processing unit for solving, for every subset of three frequencies fi,1, fi,2 and fi,3 of the set of frequencies f1...fN, the following set of three equations with three unknowns Ai, Bi and Ci, where E is the ESIDE_LENGTH parameter of a DPBO model for estimating an attenuation of the first communication line (ADSL), and Att_fi,1, Att_fi,2 and Att_fi,3 denote the measured attenuations corresponding respectively to frequencies fi, 1, fi,2 and fi,3:

$$(Ai + Bi*sqrt(fi,j) + Ci*fi,j)*E = Att\_fi,j, \text{ with } j=1...3;$$

   - a DPBO model quality determination module for determining, for each set of values Ai, Bi and Ci determined by the processing unit, a DPBO model quality parameter Qi assessing the difference between the measured attenuation Att_fk for frequency fk and the attenuation (Ai + Bi*sqrt(fk) + Ci*fk)*E estimated for frequency fk by the DPBO model;
- a selection module for selecting a DPBO model for the first communication line (ADSL) by selecting DPBO parameters A, B and C corresponding to the values Ai, Bi and Ci for which the quality parameter Qi has the lowest value; and
- a transmitter for sending the selected parameters A, B and C to a network node (FlexPt) set to inject signals in a second communication line (VDSL).

7. The device according to claim 6, wherein the DPBO model quality determination module is set to compute a quality parameter Qi equal to the sum, for each frequency fk of the set of frequencies f1...fN, of the square of the difference between the real attenuation Att_fk and the attenuation predicted by the DPBO model for frequency fk, that is:

$$Qi = sum(k=1\ldots N,square((Ai + Bi*sqrt(fk) + Ci*fk)*E\text{-}Att\_fk)).$$

8. The device according to claim 6, wherein the first communication line (ADSL) is an ADSL communication line and the second communication line (VDSL) is a VDSL communication line.

9. A communication system comprising two network nodes (Exchg, FlexPt), two communication lines (ADSL, VDSL) and two network equipments (Clt1, Clt2), wherein a first communication line (ADSL) links the first network node (Exchg) with the first network equipment (Clt1) through the second network node (FlexPt), and wherein a second communication line (VDSL) links the second network node (FlexPt) with the second network equipment (Clt2), wherein the system comprises a DPBO configuration device (DPBOdev) according to claim 6 for reducing crosstalk between the two communication lines (ADSL, VDSL).

10. The communication system according to claim 9, wherein the first network node (Exchg) is an Exchange, wherein the second network node (FlexPt) is a flexibility point, wherein the first communication line (ADSL) is an ADSL line, wherein the second communication line (VDSL) is a VDSL line, wherein the first network equipment (Clt1) is an ADSL client modem, and wherein the second network equipment (Clt2) is a VDSL client modem.

11. The communication system according to claim 9, wherein the measured attenuation Att_fk obtainable by the receiver of the DPBO configuration device (DPBOdev) is an attenuation in the section of the first communication line (ADSL) between the first network node (Exchg) and the second network node (FlexPt).

12. The communication system according to claim 9, wherein the second network node (FlexPt) comprises an attenuation module for attenuating signals injected in the second communication line (VDSL) according to a DPBO model of the first communication line (ADSL) defined by the three parameters A, B and C provided by the DPBO configuration device (DPBOdev).

13. A computer program comprising one or more stored sequences of instructions that are accessible to a processor and which, when executed by the processor, cause the processor to carry out the steps of any of claims 1 to 5.

14. A non-transitory computer-readable storage medium storing the computer program according to claim 13.

S1

dBm/Hz

PSD(f)?

Hz

FIG.1.

S2

dB

Att(f)?

Hz

S3

DSLAM ←— d? —→ Exchg

S4 — E ?

S5 — $A_i, B_i, C_i$?

S6 — A, B, C?

FIG.2.

DPBO dev

CPU

TX    RX

FIG. 3.

Europäisches
Patentamt

European
Patent Office

Office européen
des brevets

# EUROPEAN SEARCH REPORT

Application Number

EP 10 30 6510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2010/018562 A1 (ECI TELECOM LTD [IL]; MATZA AVI [IL]; SHARFER ILAN [IL]; ZEIRA ASSAF []) 18 February 2010 (2010-02-18) * abstract; figures 1-6 * * page 10, line 1 - line 3 * * page 16, line 13 - page 18, line 23 * * page 24, line 25 - page 25, line 18 * ----- | 1-14 | INV. H04M11/06 H04B3/46 |
| Y | EP 1 956 725 A1 (ECI TELECOM LTD [IL]) 13 August 2008 (2008-08-13) * abstract; figures 1-3 * * paragraph [0013] - paragraph [0021] * * paragraph [0023] - paragraph [0032] * ----- | 1-14 | |
| A | US 2008/151742 A1 (STOLLE REINHARD [DE] ET AL) 26 June 2008 (2008-06-26) * abstract; figures 1-3 * * paragraph [0019] - paragraph [059D] * ----- | 1-14 | |
| | | | TECHNICAL FIELDS SEARCHED (IPC) |
| | | | H04B H04M |

The present search report has been drawn up for all claims

| Place of search | Date of completion of the search | Examiner |
|---|---|---|
| Munich | 25 July 2011 | Ohanovici, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 10 30 6510

This annex lists the patent family members relating to the patent documents cited in  the above-mentioned European search report.
The members are as contained in the European Patent Office EDP file on
The European Patent Office is in no way liable for these particulars which are merely given for the purpose of information.

25-07-2011

| Patent document cited in search report | | Publication date | Patent family member(s) | | Publication date |
|---|---|---|---|---|---|
| WO 2010018562 | A1 | 18-02-2010 | EP | 2327165 A1 | 01-06-2011 |
| EP 1956725 | A1 | 13-08-2008 | US | 2008187077 A1 | 07-08-2008 |
| US 2008151742 | A1 | 26-06-2008 | NONE | | |

EPO FORM P0459

For more details about this annex : see Official Journal of the European Patent Office, No. 12/82